# EUROPEAN PATENT SPECIFICATION

(11) **EP 0 616 133 B1**
(45) Date of publication and mention of the grant of the patent: **13.01.1999**
(21) Application number: 94103894.5
(22) Date of filing: 14.03.1994
(51) Int. Cl.: F04F 1/06, F04B 9/12

(54) **Pumping machine and generator system utilizing the same**
Pumpe und Generatoranordnung
Pompe et système de génération

(30) Priority: 15.03.1993 JP 80059/93; 13.09.1993 JP 251097/93; 15.12.1993 JP 342888/93
(43) Date of publication of application: 21.09.1994
(73) Proprietor: Endo, Katsuhisa, Shioya-gun, Tochigi-ken (JP); Isa, Shinei, Ishigaki-shi, Okinawa-ken (JP)
(72) Inventor: Isa, Shinei, Ishigaki-shi, Okinawa-ken (JP)
(74) Representative: Tiedtke, Harro, Dipl.-Ing.

(56) References cited:
- DE-A- 3 133 387

## Description

### Field of the Invention

The present invention relates to a pumping machine utilizing expansion energy of compressed air and a cylinder for the pumping machine.

### Discussion of Background

As regards water pumping, there has heretofore been known so-called storage pumps which comprise valve means and a piston reciprocating therebetween and which deliver water in one direction by utilizing the reciprocating motion of the piston to perform water pumping.

However, since these conventional storage pumps deliver water only in one direction by the reciprocating motion of the piston, they require a large amount of energy because of frictional resistance to the piston and resistance to the movement of the water.

### SUMMARY OF THE INVENTION

The present inventor has succeeded in enabling sufficient water pumping with extremely low energy consumption, not by simply causing only water to move in one direction, but by bringing air into coexistence with water attendantly upon movement of the water, compressing the air, and then releasing the air from the pressure to generate expansion force simultaneously with discharge of the water to be pumped up.

It is an object of the present invention to provide a pumping machine enabling such highly efficient water pumping and a cylinder preferably used in the pumping machine.

It is a further object of the present invention to provide a power generator system using them. In particular, it is an object of the present invention to provide a highly efficient and energy saving pumping machine and a power generator system utilizing the same by re-pressurizing returned air having a residual pressure into compressed air for supplying to the above-mentioned cylinder.

The present invention includes a pumping machine which comprises valve means comprising a plurality of check valves and having double-layer structure that vertically move by delivery of compressed air, and air intakes for introducing external air in mid course of the reciprocating motion of the valve means, wherein external air is sucked in mid course of the reciprocating motion of the valve means as well as water to be pumped, then the air sucked in is compressed, and a water flow flowing only in one direction is generated by expansion force obtained at the time of releasing the air from pressure to appropriate for water pumping force.

According to the present invention, there is provided a cylinder for the pumping machine comprising:
a cylindrical hollow body formed with a first through-hole at its mid portion and second and third through-holes in the vicinities of its ends,
a cylindrical hollow member which is fitted in said cylindrical body slidably in the longitudinal direction of the cylindrical body and which is formed with a communication opening which is in communication with the first through-hole,
valve means mounted on the ends of said cylindrical member,
a cylinder member which is contained in said cylindrical member and which has ports in the vicinities of its ends, and
a piston member which is slidably disposed in said cylinder member and which has a rod extending through said cylinder member and having its ends fixedly connected to said valve means;
wherein said valve means each include two plates to define a cylinder chamber having a communication opening in communication with said second or third through-hole, said plates each having a plurality of check valves arranged therein, said check valves each being mounted to permit a fluid to flow only in the direction toward the inner portion of said cylinder member.

According to the present invention, there is also provided a generator system disposed under a predetermined water pressure and comprising:
an air cylinder including a piston which reciprocates by switchover between delivery of compressed air to a supply pipe and reception of compressed air from a return pipe,
a water cylinder including a water piston which is located coaxially with the piston of the air cylinder and which reciprocates in association with the movement of the piston of the air cylinder,
an air intake formed about the middle of said water cylinder for introducing external air together with water under the predetermined water pressure into water in a cylinder chamber of said water cylinder by negative pressure generated in the cylinder chamber in the course of the reciprocating motion of said water piston, and
an outlet for discharging the mixture of water with air in said cylinder chamber, which has been compressed to a predetermined pressure, by the reciprocating motion of said water piston;
said power generator system further comprising a compressed air boosting compressor including as an air pressure source connected to said return pipe in series:
a low pressure tank for storing air with a residual pressure,
a first boosting compressor for sucking the air with a residual pressure from said low pressure tank,
an intermediate pressure tank for storing the compressed air discharged from said first boosting compressor and for preventing abrupt change in the pressure,
a second boosting compressor for boosting the compressed air with an intermediate pressure from said intermediate pressure tank to a predetermined pressure,
a high pressure tank for storing the compressed air discharged from said second boosting compressor and for preventing abrupt change in the pressure, and
a receiver tank which is connected to said supply pipe for relaying the compressed air from said high pressure tank to said supply pipe;
each of said first and second boosting compressors being selected from the group consisting of one-stage to multi-stage reciprocating compressors.

As each of said first and second boosting compressors, a two-stage reciprocating compressor is preferred.

By timely controlling the compression and expansion of the air sucked together with the water to be pumped up, water pumping is carried out with a small amount of energy by virtue of the expansive action of the compressed air.

In other words, when compressed air is introduced into the cylinder member through one of the ports, the piston is caused to move toward the other port side, and valve means moves concurrently which are adapted to move in association with the piston. By the movement of the valve means, water to be pumped up is caused to flow into the cylinder chamber facing the water storage reservoir for storing water to be pumped up through check valves, and external air is also introduced into the cylinder chamber through the communication opening formed in the chamber. As a result, the air coexists with the water as a mixture in the cylinder chamber.
Upon arrival of the valve means at the top dead center, compressed air is supplied through the other port of the cylinder member to cause the valve means to descend. By the descent, the air in the cylinder chamber is further compressed. Consequently, the water together with the air in the cylinder chamber is caused to flow into the inner portion of the hollow cylinder member through the check valves. The air flowing from the cylinder chamber into the inner portion of the hollow cylinder member expands here. As a result, water is discharged to the outside through the first through-hole, thereby effecting water pumping.

Further, as a boosting compressor for returned air, one having the above-mentioned structure is used.
Consequently, it is possible that a returned air having a positive residual pressure higher than the atmospheric pressure is stored in the low pressure tank and drawn into the first boosting compressor and compressed therein and then discharged and stored in the intermediate pressure tank and further compressed therein to a predetermined pressure and then stored as a high pressure compressed air and supplied to the supply pipe via the receiver tank as a compressed air supply.

### BRIEF DESCRIPTION OF THE DRAWINGS

Fig. 1 is a diagrammatic view showing one embodiment of the pumping machine according to the present invention;
Fig.2 is a diagrammatic view schematically showing a power generator system which utilizes the pumping machine according to the present invention to generate electric power;
Fig.3 is a vertical sectional view of one embodiment of the cylinder for the pumping machine according to the present invention, in which valve members of the water cylinder are at the bottom dead centers;
Fig.4 is a vertical sectional view of the embodiment of the cylinder for the pumping machine according to the present invention, in which the valve members of the water cylinder have somewhat ascended from the bottom dead centers;
Fig.5 is a vertical sectional view of the embodiment of the cylinder for the pumping machine according to the present invention, in which the valve members of the water cylinder are at the top dead centers;
Fig.6 is a vertical sectional view of the embodiment of the cylinder for the pumping machine according to the present invention, in which the valve members of the water cylinder have somewhat descended from the top dead centers;
Fig.7 is a perspective view generally showing one mode of distribution of check valves in a disc member to which check valves are to be attached;
Fig.8 is a perspective view generally showing one form of the check valve used for the cylinder for the pumping machine as shown in Fig.3;
Fig.9 is a general perspective view of the water cylinder showing one form of each of the outlet communication opening and the air intake communication openings
Fig.10 is a perspective view of a booster circuit for compressing air according to the present invention;
Fig.11 shows a pumping machine utilizing the booster circuit for compressing air according to the present invention; and
Fig.12 is a diagrammatic view schematically showing power generation mechanism utilizing the pumping machine comprising a compressed air booster for the pumping machine according to the present invention.

### DETAILED DESCRIPTION OF THE PREFERRED EMBODIMENT

The present invention will be described in detail with reference to the preferred embodiments.

It should, however, be understood that the present invention is by no means restricted to the members, arrangements and the like which will specifically be described below, and that various changes and modifications may be made without departing from the spirit and scope of the present invention.

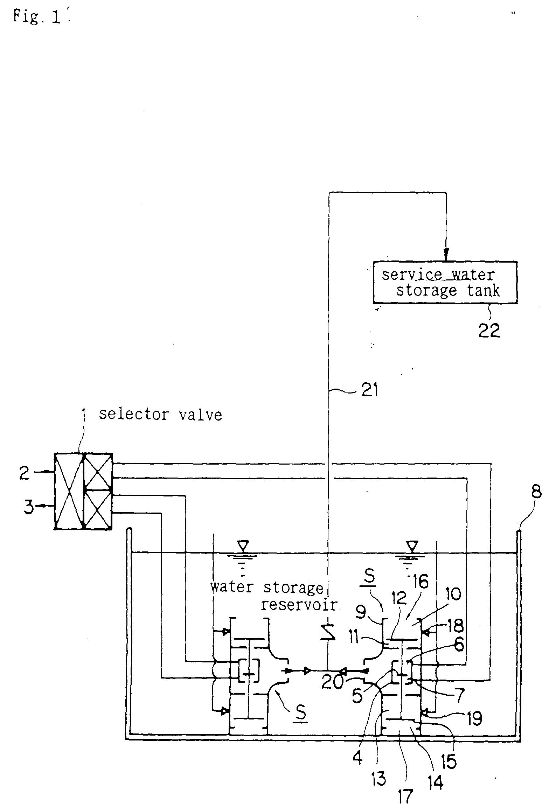

Fig.1 is a diagrammatic view of one embodiment of the present invention schematically showing a water pumping mechanism. Although this embodiment is so constructed that two pumping machines each comprising an air cylinder and pumped-water cylinders are arranged in parallel, air flow and water flow will be described below with respect to only one of the pumping machines for the convenience of explanation.

In the Fig., reference numeral 1 represents a selector valve for air, and the selector valve 1 alternately directs compressed air at predetermined time intervals toward one side 6 and the other side 7 of an air cylinder 4 to cause an air piston 5 to reciprocate. The selector valve 1 directs compressed air from a compressed-air pipe 2 toward one side 6 of the air cylinder 4 to cause the air piston 5 to move.
On the other hand, air in the other side 7 of the air cylinder 4 is compressed by the air piston 5 and sent back to the selector valve 1 and returned through an outlet pipe 3 to an accumulator tank (not shown). The compressed air thus returned is directed again to the selector valve 1 via first and second boosters (not shown) and through the compressed-air pipe 2. The selector valve 1 changes air flow after lapse of the predetermined time interval, and directs the air flow toward the other side 7 of the air cylinder 4 to move the air piston 5 to one side 6 of the air cylinder 4. Consequently, air in one side 6 of the air cylinder 4 is discharged therefrom by the air piston 5 and returned through the outlet pipe 3 to the accumulator tank (not shown).

Thus, the compressed air is circulated through the air cycle in the above-mentioned circulatory course, and thereby the piston 5 is caused to move. In this case, a compressed-air pressure of 5kg/cm² G, a cylinder diameter of 500mm, a piston stroke of 250mm and a piston area of 1918cm² are employed. The reciprocating motion of the air piston 5 in the air cylinder 4 is set at 92 reciprocations per minute.

In the next place, a water channel is described.

In Fig.1, reference number 8 represents a water storage reservoir, and the water storage reservoir 8 has a depth of about 7m, i.e., it is capable of providing a water pressure corresponding to the water depth of about 7m. The air piston 5 of the air cylinder 4 is associated with valve means 12 and 15 in water cylinder 9. When the piston 5 is pushed downwardly by supplying the compressed air to one side 6 of the air cylinder 4, the valve means 12 and 15 are also pushed down simultaneously.

Each of the valve means 12 and 15 has a double-layer structure in which 18 check valves having a diameter of 100mm are concentrically distributed in each of the layers, i.e., each of the valve means has 36 check valves in total. The double-layer structure is employed so as to prevent water in a cylinder 11 from escaping from the cylinder 11 to the cylinder 10 due to reaction which is caused when the valve member 15 in the opposite cylinder 13,14 is elevated.

By reciprocating motion of the valve means 12 and 15, water is alternately caused to move as follows. Water in the cylinder 11 is discharged from an outlet 20 through a pumped-water pipe 21, and water in the cylinder 10 is transferred through 36 check valves (not shown) into the cylinder 11. When the valve means 12 descends, water in the cylinder 11 is pushed by the valve means 12 and hence discharged from the outlet 20 through the pumped-water pipe 21 into a service water storage tank 22. On the other hand, the valve member 15 which is also associated with the same piston 5 is simultaneously pushed down to cause water in a cylinder 14 to be transferred into a cylinder 13.

Upon arrival of the piston 5 and the valve members 12 and 15 at their bottom dead centers, the above-mentioned direction of the air flow is switched over, and thereby the piston 5 begins ascending. Attendantly upon this, the valve members 12 and 15 also begin ascending to transfer water in the cylinder 10 into the cylinder 11. Upon initiation of the ascent of the valve member 12, interior of the cylinder 11 momentarily becomes vacuum. Under this vacuum condition, the valve members 12 and 15 continue to ascend, and thereby water in the water storage reservoir is sucked in and yet when the valve member 12 passes an air intake 18 provided in the cylinder, air enters into the cylinder 11 from the air intake 18. In other words, the interior of the cylinder 11 is initially filled only with water and afterward becomes filled with a mixture of water with the air introduced in mid course.

When the valve member 12 begins descending upon arrival of the valve member 12 at its top dead center, the mixture of water with air in the cylinder 11 is pushed downwardly, in particular, the air in the cylinder 11 is compressed. As the valve member 12 is pushed down with the air present in the cylinder as the mixture with water, the air is further compressed. When pressure of the air exceeds a predetermined value, the air is discharged together with the water through the outlet 20 to the outside of the cylinder.

At this time, the air which has been compressed is released from the pressurized condition to expand and, while coexisting with the water as a mixture, pushes the water upwardly from the outlet 20 through the pumped-water pipe 21 to the service water storage tank 22 located outside.

On the other hand, the same steps as in the cylinder 10,11 are repeated in a cylinder 13,14 opposite to the cylinder 10,11. The valve means 15 is pushed down to cause water which has flowed into the cylinder 14 through a water inlet 17 to be transferred from the cylinder 14 to the cylinder 13. When the valve member 15 passes a predetermined position in mid course of the movement in the cylinder 13,14, external air is introduced through an air intake 19 into the cylinder 13 owing to negative pressure generated therein. As the valve member 15 ascends, the air is compressed to bring the pressure of the air to a predetermined pressure. When the predetermined pressure is reached, the air is discharged through an outlet 20 together with the water to release the air from the pressure, so that the water as a mixture with the air is pushed up from the outlet 20 to the service water storage tank 22 located outside.

In the water channel of this embodiment, each of the cylinders 10,11 and 13,14 and the valve means 12 and 15 has a diameter of 1400mm and each of the valve means 12 and 15 travels a stroke of 250mm. Midway between the cylinder 10,11 and the cylinder 13,14, the outlet 20 is formed and the outlet 20 has a diameter of 300mm. As the air intakes 18 and 19, pipes each having a diameter of 5 inches are used. The air intakes 18 and 19 are provided at the midpoints of the stroke of the respective valve members 12 and 15, i.e., at the positions of 12.5cm.

In this embodiment, there are arranged in parallel the two pumping machines each comprising the air cylinder 6,7 having the air piston 5 and the two water cylinders 10,11 and 13,14 respectively having the valve members 12 and 15 which move in association with the piston 5. However, there may be used (a) pumping machine(s) in which a single valve member associated with a piston 5 is caused to vertically reciprocate attendantly upon movement of the piston 5 to take in water and to introduce air and the water is pumped up utilizing force of the compressed air. Further, besides the use of the two pumping machines in parallel, a single pumping machine may be used or three or more pumping machines may be used in parallel. Of these arrangements, those in which pumping machines are arranged in parallel and/or in which two valve means are associated with a piston are preferred. The reason for this is that more smooth operation in pumping up water is enabled due to increased number of times of air compression in spite of somewhat complicated valve control.

In this embodiment, the valve means are caused to vertically reciprocate by utilizing compressed air, and external air as well as water is sucked by the movement of the valve members. However, means for the movement of the valve means is restricted to the switchover of the direction of compressed air flow. Other transmission means, for example, an oil pump, a linear motor which readily enables reciprocating motion, or the like may be used.

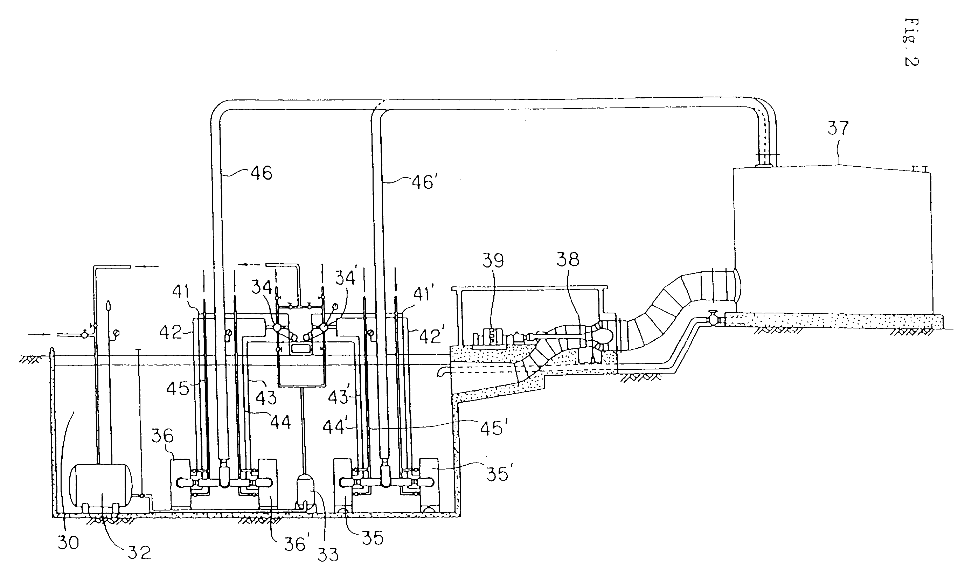

Fig.2 is a diagrammatic view schematically showing power generation mechanism utilizing a pumping machine as described above.

In Fig.2, reference numeral 32 represents an accumulator tank, which stores up compressed air from a compressor (not shown). The compressor (not shown) is operated with commercial power till initiation of private power generation. Thereafter, commercial power is switched over to private power to operate the compressor. Reference numeral 33 represents an air receiver (relay tank), which transfers the compressed air from the accumulator tank 32 to a selector valves 34,34'.

In the power generator system according to this embodiment, a four port connection-two position rotary selector valve is used, and a KS type motor of 0.75 kw is used as a power for the selector valves 34,34'. The valves 34,34' are so constructed that air released from an air release port (R port) is caused to flow into a collector of a booster circuit (not shown) and boosted in the booster circuit so as to pneumatically force itself to enter into the accumulator tank 32. In this embodiment, each of the two valves 34 and 34' is used to deliver and to receive the compressed air, thereby effecting switchover between delivery and reception of the compressed air.

Reference numerals 35, 35', 36 and 36' represent pumping machines which are those as described above. In the generator system according to this embodiment, these four pumping machines are used. Accordingly, by the switchover between delivery and reception of the compressed air by means of the valves 34,34', pistons in air cylinders of the pumping machines 35, 35', 36, and 36' are alternately caused to reciprocate. In association with the movement of the pistons in the air cylinders, valve means in water cylinders of the pumping machines are caused to reciprocate to pump up water in the water cylinders together with air which has been sucked therein to a service water storage tank 37. The pumped water is stored in the service water storage tank 37 and then released therefrom to drive a water turbine 38 by utilizing a head of the water, thereby operating a power generator 39 to obtain a predetermined generated energy.

Reference numeral 30 represents a water storage reservoir which is provided with the accumulator tank 32, the air receiver 33 and the pumping machines 35, 35', 36 and 36'and which is normally filled with water.

The pumping machines 35, 35', 36 and 36' are provided with inlet and outlet pipes 43' and 44', 41' and 42', 41 and 42, and 43 and 44, respectively, which are connected to the selector valves 34', 34', 34 and 34, respectively, by which switchover between delivery and reception of the compressed air is performed.

To the pumping machines 35, 35' and 36, 36' are connected air intake pipes 45 and 45' for introducing external air, respectively, through which air is brought into coexistence with water in the cylinders as a mixture attendantly upon reciprocating motion of the valve means (not shown) in the pumping machines. By virtue of expansion force of the air coexistent with the water as a mixture, the water is pumped up to the service water storage tank 37 via pumped-water pipes 46' and 46 connected to the pumping machines 35, 35' and 36, 36', respectively.

In this embodiment, a compressor (not shown) is used to obtain compressed air, and the compressed air is temporarily stored in the accumulator tank 32 and then used for the air cylinders and the compressed air used is returned to the accumulator tank 32 for recycling. In case lowering of the pressure takes place in the course of the circulation, an auxiliary pump (not shown) may be attached to the accumulator tank 32 in addition.

In the next place, an embodiment of the cylinder mechanism for the above-described pumping machine will be described.

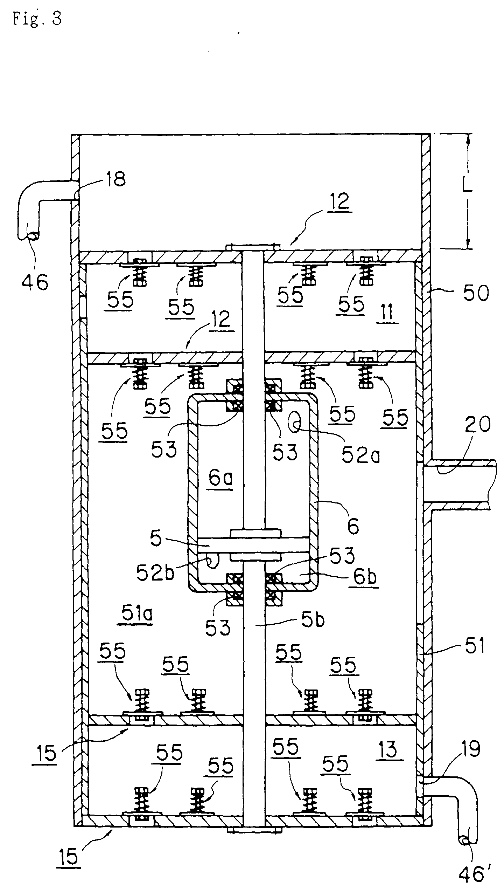

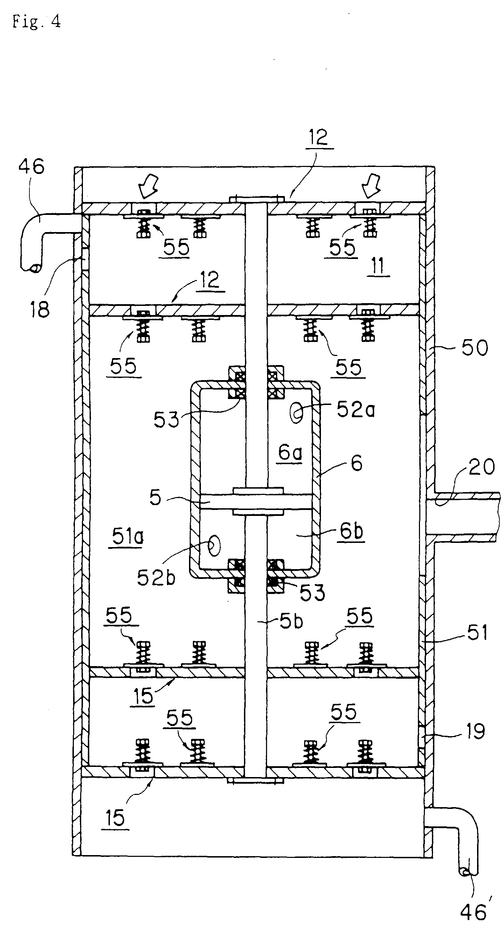

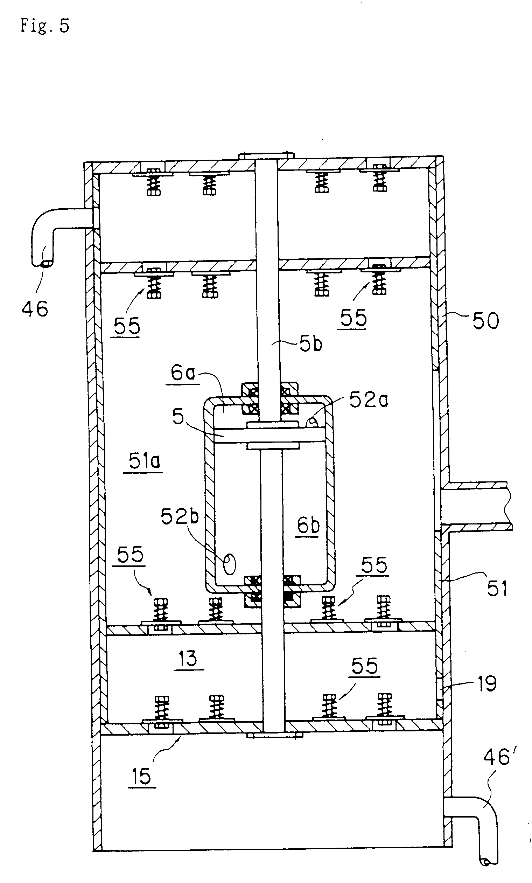

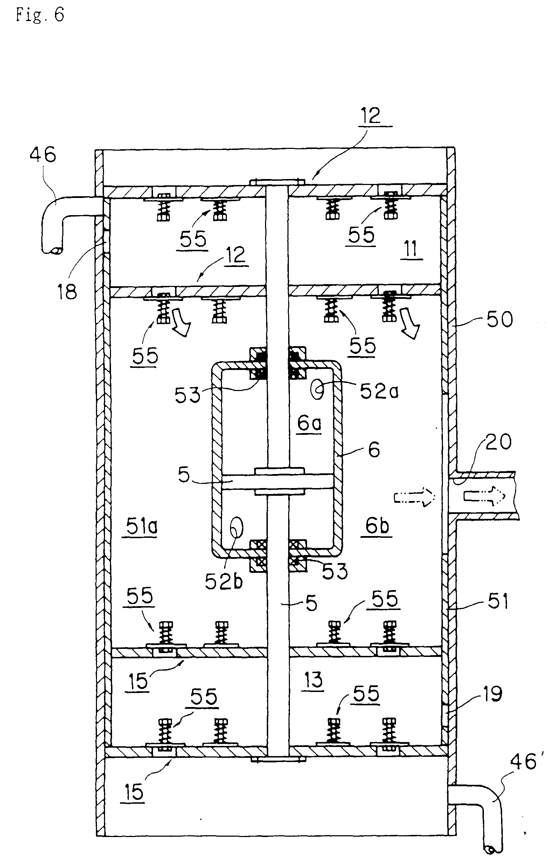

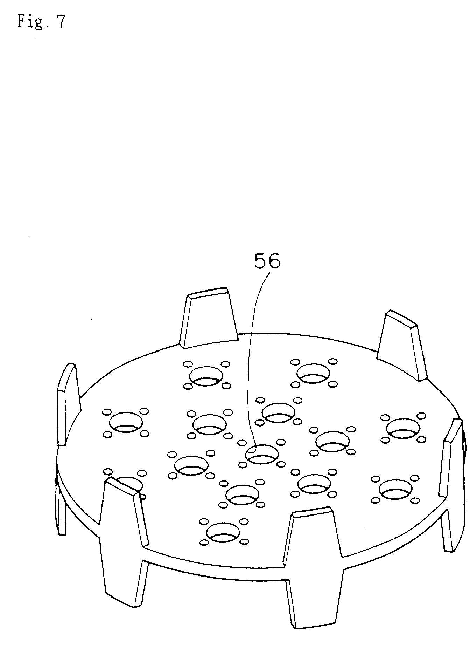

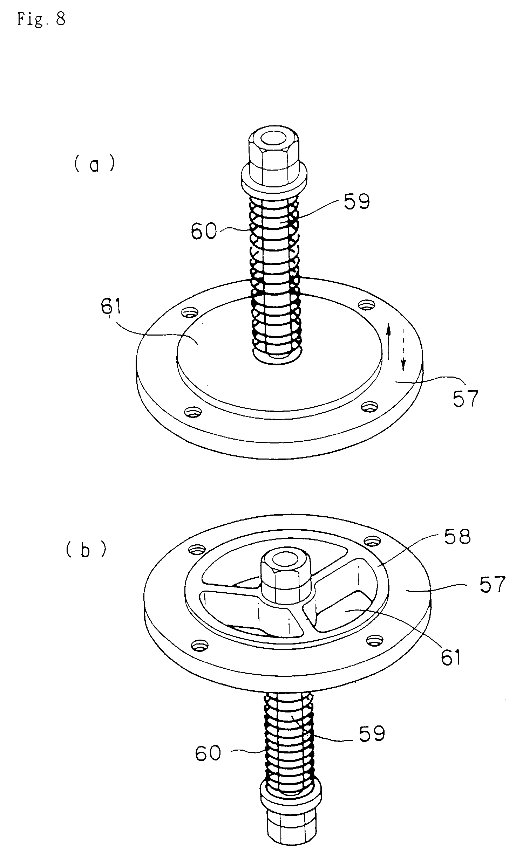

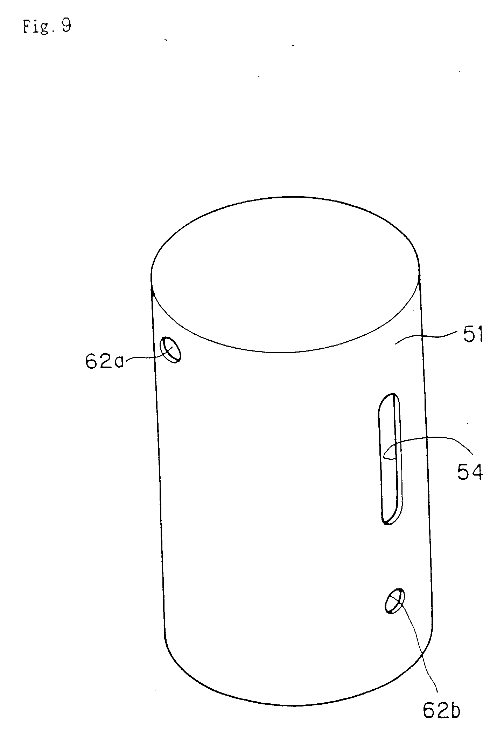

Referring to Figs.3 and 9, one embodiment of the cylinder for the pumping machine according to the present invention will be described below. Fig.3 is a vertical sectional view of one embodiment of the cylinder for the pumping machine according to the present invention, in which valve members of the water cylinder are at the bottom dead centers. Fig.4 is a vertical sectional view of the embodiment of the cylinder for the pumping machine according to the present invention, in which the valve members of the water cylinder have somewhat ascended from the bottom dead centers. Fig.5 is a vertical sectional view of the embodiment of the cylinder for the pumping machine according to the present invention, in which the valve members of the water cylinder are at the top dead centers. Fig.6 is a vertical sectional view of the embodiment of the cylinder for the pumping machine according to the present invention, in which the valve members of the water cylinder have somewhat descended from the top dead centers. Fig.7 is a perspective view generally showing one mode of distribution of check valves in a disc member to which check valves are to be attached. Fig.8 is a perspective view generally showing one form of the check valve used for the cylinder for the pumping machine as shown in Fig.3. Fig.9 is a general perspective view of the water cylinder showing one form of each of the outlet communication opening and the air intake communication openings.

This cylinder for the pumping machine corresponds to the cylinder S of the pumping machine previously shown in Fig.1, and is composed mainly of a main cylinder 50 as a cylinder body, a water cylinder 51 as a hollow cylinder member fitted in the main cylinder 50, an air cylinder 6 as a cylinder member located in the water cylinder 51, an air piston 5 as a piston member contained in the air cylinder 6, and valve means 12,15 located in the water cylinder 51.

The main cylinder 50 in this embodiment is formed to be a hollow cylinder, and therein, the water cylinder 51 is fitted slidably in the longitudinal direction (the vertical direction in Fig.3). About the middle of the length of the main cylinder 50 is formed an outlet 20 as a first communication opening to enable a pumped-water pipe 21 to be connected thereto. Further, the outlet 20 is in communication with a central chamber 51a via an outlet communication opening 54 (described below). Moreover, in the vicinities of both ends of the main cylinder 50, air intake openings 18 and 19 are formed to enable air intake pipes 46 and 46' to be connected thereto, respectively. The air intake openings 18 and 19 are formed at the midpoints of the strokes L of the valve means 12 and 15 described below, respectively. In other words, each of them is formed at the point about L/2 distant from the respective end of the main cylinder 50.

The air cylinder 6 contains therein the air piston 5 formed to be a disc, and the interior of the air cylinder 6 is divided by the air piston 5 into the first cylinder chamber 6a and the second cylinder chamber 6b. In the vicinities of both ends of the air cylinder 6, ports for compressed air 52a and 52b are formed, and compressed air pipes (not shown) are connected thereto. A piston rod 5a about which the air piston 5 is fixed extends through both the end surfaces of the air cylinder 6, and O-rings 53 are provided around the pierced portions to maintain the sealed condition in the air cylinder.

The air piston 5 is formed to be a disc and inserted in the air cylinder 6 slidably in the longitudinal direction (the vertical direction in Fig.3) of the air cylinder 6. Through the center portion of the air piston 5 extends the piston rod 5a, and they are fixed to each other. The ends of the piston rod 5a are fixedly attached to the valve means 12 and 15.

The water cylinder 51 is fitted in the main cylinder 50 slidably in the longitudinal direction of the main cylinder 50, and accordingly, has a configuration of a hollow cylinder in conformity with the main cylinder 50. The end portions of the water cylinder 51 are provided with valve means 12 and 15.

In the water cylinder 51, a communication opening 54 which is in communication with the previously described outlet 20 of the main cylinder 50 is formed, for example, as an elongate hole in the longitudinal direction of the water cylinder 51, as shown in FIg.9 (Incidentally, the valve means 12 and 15 are omitted in Fig.9.)

Each of the valve means 12 and 15 at the ends of the water cylinder 51 has a double structure. In other words, each of the valve means 12 and 15 at the ends of the water cylinder 51 of this embodiment comprises disc members disposed in series with a predetermined distance, and a plurality of check valves arranged in the disc members. The arrangement of the check valves in this embodiment is such that the check valves 55 are arranged on two concentric circles around the central through-hole 56 through which the piston rod 5a extends, six of the check valves 55 being arranged on the inner concentric circle and eight of the check valves 55 being arranged on the outer concentric circle, as shown in Fig. 7.

The check valve 55 comprises, as shown in Fig. 8, an annular mounting member 57 , a passage window 58 fitted into the center hole of the annular mounting member 57, a bolt 59 having its one end fastened to the center of the passage window 58 with a nut, a spring 60 mounted between the other end of the bolt 59 and passage window 59, and a disc-shaped valve element 61 covering the passage window 58 and disposed between the spring 60 and the passage window 58.

As shown in Fig.9, the water cylinder 51 is also formed with air intake communication openings 62a and 62b as second and third communication openings which are in communication with the air intakes 18 and 19 of the main cylinder 50, respectively.

In view of the structure of the check valve, when a fluid flows upon the valve element 61 from the side of the check valve on which the valve element 61 is disposed [the side shown in Fig.8(a)], the valve element 61 is pressed against the passage window 58 by the pressure of the fluid to obstruct the passage window 58, thereby preventing the fluid from flowing into the reverse side through the passage window 58. On the other hand, when a fluid flows upon the valve element 61 through the passage window 58 from the side of the check valve reverse to the side on which the valve element 61 is disposed [the side shown in Fig.8(b)], the valve element 61 is caused to move in the axial direction of the bolt 59 [the direction shown by the solid line arrow in Fig.8(a)] by the pressure of the fluid against the biasing force of the spring 60, thereby allowing the fluid to flow into the other side through the passage window 58. When the pressure of the fluid is surpassed by the biasing force of the spring 60, the valve element 61 is again pressed against the passage window 58 by the biasing force, thereby leading to closed condition of the check valve.

Then, operation of the cylinder having the above-described structure will be described with reference to Fig.1 and Figs.3 to 6.

Fig.3 shows the cylinder in which the air piston 5 is at the most lowered position, namely, the bottom dead center. The air piston 5 is associated with the valve members 12,15, and accordingly, when the air piston 5 is at its bottom dead center, the valve members 12,15 are at their bottom dead center.

Upon arrival of the air piston 5 at the bottom dead center, air flow is switched over by the action of the selector valve 1 (see Fig.1) to start introduction of compressed air from the other port 52b of the air cylinder 6, and accordingly, the air piston 5 begins to ascend.

The valve members 12,15 begin to ascend concurrently with the start of the ascent of the air piston 5, thereby causing water in a water storage reservoir (see Fig.1) to flow into the cylinder 11 through the check valves 55 of the valve member 12 (see contoured arrows in Fig.4). In the course of the ascent of the valve member 12 concurrent with the ascent of the air piston 5, air is caused to flow into the cylinder 11 through the air intake 18 formed in the main cylinder 50. As a result, the air coexists with the previously introduced water as a mixture in the cylinder 11.

Upon arrival of the valve member 12 at the top dead center (see Fig.5), the air flow is again switched over by the action of the selector valve 1 to start introduction of compressed air from the other port 52a of the air cylinder 6, and accordingly, the valve members 12,15 begins to descend in association with the start of the descent of the air piston 5. As the valve member 12 descends, the air in the cylinder 11 is gradually compressed. When the air is compressed to such an extent that the valve element 61 of the check valve 55 is pushed down against the biasing force of the spring 60, the compressed air and water in the cylinder 11 push down the valve element 61 of the check valve 55 mounted on the center chamber side of the valve member 12 to discharge themselves into the center chamber 51a of the water cylinder 51 (contoured arrows in Fig.6).

Upon being discharged from the cylinder 11 to the center chamber 51a, the air is released from the pressure to expand in the center chamber 51a and consequently pushes up the water discharged into the center chamber 51a from the outlet 20 through a pumped-water pipe 21 (see Fig.1) to a service water storage tank 22 (see arrows shown by chain-double dot line).

Then, the piston returns to the position shown in Fig.3 where the piston 5 is at the bottom dead center. Subsequently, the same operations as described above will be repeated. Incidentally, substantially the same operation as described with respect to the valve member 12 is performed by the valve member 15. Therefore, explanation on the operation of the valve member 15 is omitted.

In the above embodiment, each of the valve members 12,15 is provided with 14 check valves 55. However, the number of the check valve 55 is not necessarily restricted to this number. It is of course possible to select any convenient number of the check valve.

In the next place, an embodiment of a recycle booster according to the present invention will be described with reference to the drawings, which boosts the pressure of circulated air in connection with the pumping machine of the present invention.

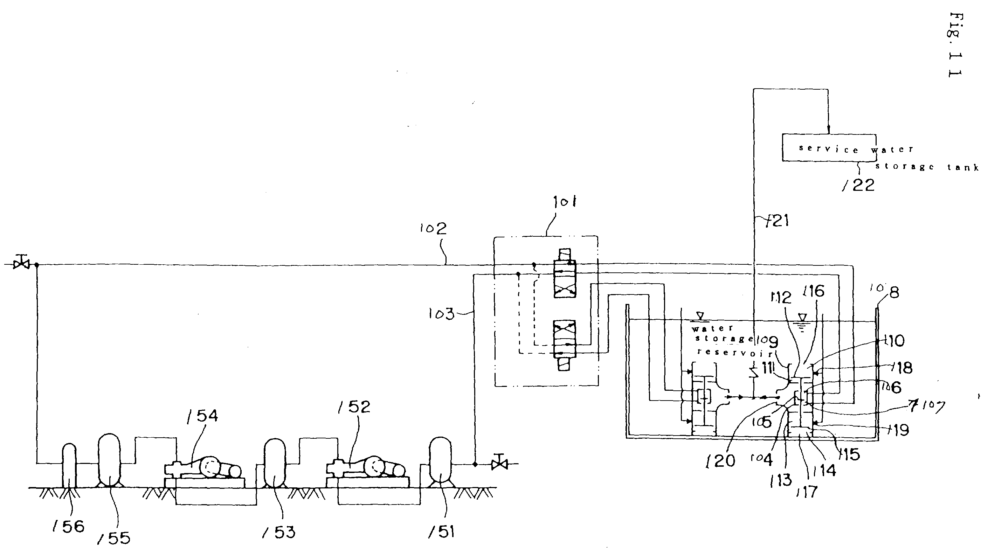

Fig.11 shows the pumping machine utilizing a booster circuit for compressing air according to the present invention. Although this Fig. shows two pumping machines each comprising an air cylinder 104 and a water cylinder 109 are symmetrically disposed in a water storage reservoir 108 in parallel, description will be made hereinafter with respect only to one of them for the convenience of explanation.

Reference numeral 101 represents an air flow selector valve, and two 4 port connection-2 position electromagnetic selector valves (so-called 4 port connection valves) are used. Reference numeral 102 represents a supply pipe for compressed-air, and reference numeral 103 represents a return pipe for compressed-air with residual pressure.

At the central portion of the pumping machine uprightly installed in water, an air cylinder 104 is located. The air cylinder 104 is divided into two pressure chambers 106,107 by a piston 105. The air cylinder 104 is surrounded by a substantially concentric water cylinder 109, and water pistons 112,115 having a diameter larger than that of the piston 105 are concentrically mounted on upper and lower ends of a piston rod vertically extending through the piston 105, respectively. Above and below the water piston 112, a cylinder chamber 110 having a water supply top opening 116 which opens to the water storage reservoir and a cylinder chamber 111 which is sealed until a discharge valve or the like of an outlet 120 opens are defined, respectively. Likewise, above and below the water piston 115, a cylinder chamber 114 having a water supply bottom opening 117 which opens to the water storage reservoir and a cylinder chamber 113 which is sealed until a discharge valve or the like of an outlet 120 opens are defined, respectively. In each of the water pistons 112,115, a plurality of holes piercing therethrough in the axial direction are concentrically arranged. A check valve (not shown) is fitted into each of the through-holes to cause water to flow in one direction. In other words, the water piston 112 permits water to flow in one direction from the cylinder chamber 110 into the cylinder chamber 111 only during ascent of the piston 112. On the other hand, the water piston 115 permits water to flow in one direction from the cylinder chamber 114 into the cylinder chamber 113 only during descent of the piston 115. Therefore, the check valves on the water piston 112 and those on the water piston 115 are mounted in the opposite directions.

Reference numerals 118 and 119 represent air intakes. The air intakes 118 and 119 are formed to introduce external air into the cylinder chambers 111 and 113 by making use of negative pressure generated in the cylinder chambers 111 and 113 immediately after the start of the ascent of the piston 112 subsequent to the discharge of a mixture of water with air and immediately after the start of the descent of the piston 115 subsequent to the discharge of a mixture of water with air, respectively, in parallel with introduction of water under predetermined water pressure into the cylinder chamber 111 and 113.

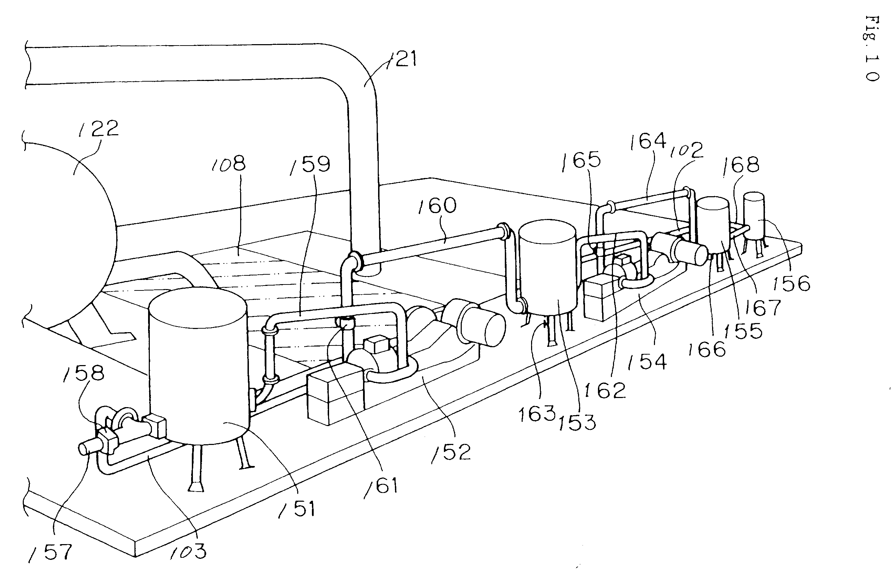

THe embodiment of the compressed air booster according to the present invention which is used for the pumping machine having such a construction comprises a low pressure tank 151, a first boosting compressor 152, an intermediate pressure tank 153, a second boosting compressor 154, a high pressure tank 155, and a receiver tank 156 which are connected to the return pipe for the compressed air having residual pressure in parallel, as shown in Fig.10. The returned air is boosted by means of the two two-stage reciprocating compressors of installation type and supplied to the compressed air supply pipe 102 connected thereto. In other words, the return pipe 103 (made of a steel) is connected to an external air introducing pipe 157 (made of a steel) at a point just before the low pressure tank 151 (made of a steel), the confluence pipe is connected to the inlet of the low pressure tank 151. The external air introducing pipe 157 is provided with a control valve 158 which is closable for the time when only the compressed air having residual pressure is intended to be supplied from the return pipe 103.

The low pressure tank 151 has a capacity of 0.9m³ to ensure the amount of air to be drawn into the first boosting compressor 152. A connecting pipe 159 (made of a steel) from the outlet of the low pressure tank 151 to the inlet valve of the first boosting compressor 152 runs once upwardly, then horizontally and then downwardly to the inlet valve.

As the first boosting compressor 152 provided with a view mainly to sucking a required amount of air from the low pressure tank 151, there is used a reciprocating compressor of a two-stage horizontal type (double acting type) with a rated capacity of 12m³/min, an inlet pressure larger than atmospheric pressure (positive pressure), an outlet pressure of 22m³/min, a rated speed of 1,500 rpm., and motor power consumption of 7kw.

The capacity of the compressor is selected by first determining the total air volume from the air flow in the air cylinder 104 of the pumping machine and the supply and return pipes 102,103 and a margin air volume, and determining the delivery air volume from the product of the displacement of the piston compressor and a volumetric efficiency, followed by comparison between the determined values. In the case of the present invention, appropriate capacities are allotted to the first and second boosting compressors based on these values.

A connection pipe 160 (made of a steel) connected to the outlet valve of the first boosting compressor 152 runs upwardly via a control valve 161, then horizontally and then downwardly to the inlet of the intermediate pressure tank 153 (made of a steel).

The intermediate pressure tank 153 is used to temporarily store compressed air for prevention of abrupt change in the pressure, and yet, it serves to reduce pulses of the compressed air discharged from the first boosting compressor 152, and when the air is caused to flow intermittently, it serves to prevent the pressure from lowering at the time of occurrence of air flow in a large amount by supplying compressed air in compensation therefor.

The capacity of the intermediate pressure tank 153 is determined by the delivery air volume from the first boosting compressor 152, the air consumption in the air cylinder 104 of the pumping machine and the supply and return pipes, the maximum pressure in the intermediate pressure tank 153, the allowable minimum pressure in the intermediate pressure tank 153, operation time per minute of the air cylinder 104 and the like. In this embodiment, the capacity is 28m³/min.

The intermediate pressure tank 153 is provided with a drain cock 163 to discharge stagnant drain, oil and the like from the bottom of the tank 153 to the outside.

A connection pipe 162 (made of a steel) from the outlet of the intermediate pressure tank 153 to the inlet valve of the second boosting compressor 154 runs once upwardly, then horizontally and then downwardly to the inlet valve.

The second boosting compressor 154 is provided with a view to pressurizing the compressed air having the intermediate pressure to a predetermined pressure. As the second boosting compressor 154, also used is a reciprocating compressor of a two-stage horizontal type (double acting type) with a rated capacity of 20 horsepower, an inlet pressure of 22m³/min, an outlet pressure of 12kg/cm², a rated speed of 1,800 rpm., and motor power consumption of 20kw. The capacity of the second boosting compressor is selected by allocation between this compressor and the first boosting compressor 152.

A connection pipe 164 (made of a steel) connected to the outlet valve of the second boosting compressor 154 runs upwardly via a control valve 165, then horizontally and then downwardly to the inlet of the high pressure tank 155 (made of a steel). Besides the control valves 161 and 165, the pipes 160 and 164 may be provided with check valves to prevent back-flows from the intermediate pressure tank 153 to the first boosting compressor 152 and from the high pressure tank 155 to the second boosting compressor 154 respectively. However, the outlet valves of the boosting compressor generally serve therefor.

The high pressure tank 155 is also used to temporarily store compressed air for prevention of abrupt change in the pressure, and yet, it serves to reduce pulses of the compressed air discharged from the second boosting compressor 154, and when the air is consumed intermittently, it serves to prevent the pressure from lowering at the time of occurrence of air consumption in a large amount by supplying compressed air in compensation therefor.

The capacity of the high pressure tank 155 is determined in the same manner as described for the capacity of the intermediate pressure tank 153. In this embodiment, the capacity is 6.25m³.

The high pressure tank 155 is also provided with a drain cock 166 to discharge stagnant drain, oil and the like from the bottom of the tank 155 to the outside.

A connection pipe 167 from the outlet of the high pressure tank 155 to the inlet of the receiver tank 156 runs straight and horizontally. The receiver tank 156 serves as a relay tank. A pipe 168 (made of a steel) extending from the outlet of the receiver tank 156 is connected to the compressed air supply pipe 102 (made of a steel).

Then, operation of the pumping machine using the compressed air booster according to the present invention will be described in terms mainly of the air flow.

The air flow selector valve 1 directs compressed air having a pressure of about 12kg/cm² G from the supply pipe 102 toward one pressure chamber 106 to move the air piston 105. On the other hand, air in the other pressure chamber 107 of the air cylinder 104 is pushed out therefrom by the air piston 5 and, while retaining residual pressure of about 5 to 7 kg/cm² G, sent back to the selector valve 101 and returned through the return pipe 103 to the low pressure tank 151.

The thus returned compressed air with a residual pressure of about 5 to 6 kg/cm² G is boosted through the low pressure tank 151 and the first boosting compressor 152 to a pressure of about 8 kg/cm² G and through the intermediate tank 153 and the second boosting compressor 154 to a pressure of about 12 kg/cm² G, and stored in the high pressure tank 155, and directed again to the selector valve 101 via the receiver tank 156 and through the supply pipe 102. The selector valve 101 changes air flow after lapse of a predetermined time interval, and directs the compressed air having a pressure of about 12 kg/cm² G toward the other pressure chamber 107 of the air cylinder 104 to move the air piston 105 to one pressure chamber 106 of the air cylinder104. Consequently, the air in one pressure chamber 106 of the air cylinder 104 is pushed out therefrom by the air piston 105 and, while retaining a residual pressure of about 5 to 6 kg/cm² G, returned through the return pipe 103 to the low pressure tank 151. The reciprocating motion of the air piston 105 in this manner is repeated.

Thus, the compressed air is circulated through the air cycle in the above-mentioned circulatory course, and thereby the piston 105 is caused to move. In this case, the initial pressure of about 12kg/cm² G of the compressed air is consumed in the reciprocating motion of the air piston 105, and the compressed air is returned as a compressed air having a residual pressure of about 5 to 6 kg/cm² G. The compressed air booster according to this embodiment is used to re-pressurize the compressed air with residual pressure of about 5 to 6 kg/cm² G which has heretofore been discharged into the atmosphere to a high pressure, thereby enabling energy saving effect in water pumping-up to be enhanced.

Now, the operation of the compressed air booster according to the present invention will be described further in detail.

The compressed air with a residual pressure of about 5 to 6 kg/cm² G returned from the return pipe 103 is stored in the low pressure tank 151 under the same pressure. By operation of the first boosting compressor 152, the compressed air stored in the low pressure tank 151 is drawn into the inlet of the first boosting compressor 152 through the pipe 159 and boosted to a pressure of about 8 kg/cm² G.

The air boosted to a pressure of about 8 kg/cm² G in the first boosting compressor 152 is discharged from the outlet of the first boosting compressor 152, and pneumatically directed through the pipe 160 via the control valve 161 to the intermediate pressure tank 153, and stored therein at the predetermined pressure level of about 8 kg/cm² G. The intermediate pressure tank 153 serves to prevent abrupt change in the pressure and to reduce pulses of the compressed air discharged from the first boosting compressor 152.

The compressed air with the predetermined pressure stored in the intermediate pressure tank 153 is drawn into the inlet valve of the second boosting compressor 154 through the pipe 162 and further boosted therein to a pressure of about 12 kg/cm² G. It is noted that two two-stage reciprocating compressors are used here in series. This is because it is undesirably power consuming,i.e., poor in energy efficiency to boost the compressed air to the predetermined final pressure by means of one-stage reciprocating compressors. In other words, when number of the stage is increased, air after completion of the first stage boost is cooled by an intermediate cooling device to the ambient temperature, and from this condition, the second stage boost can be started. Consequently, power consumption is reduced to attain improved energy efficiency. However, use of one multi-stage reciprocating compressor having a large capacity leads to high initial cost. Therefore, the two two-stage reciprocating compressors are disposed in parallel. Practically, the air is boosted from a positive pressure to about 8 kg/cm² G in the first boosting compressor 152, and from about 8 kg/cm² G to about 12 kg/cm² G in the second boosting compressor 154.

The air which has been subjected to the second stage compression in the second boosting compressor 154 is discharged from the outlet valve of the second boosting compressor 154, and pneumatically directed through the pipe 164 via the control valve 165 to the high pressure tank 155, and stored therein at the predetermined pressure level. The high pressure tank 155 also serves to prevent abrupt change in the pressure and to reduce pulses of the compressed air discharged from the second boosting compressor 154. The compressed air with the predetermined pressure which is stored in the high pressure tank 155 is directed through the pipe 167 to the receiver tank 156 as a relay tank, and then directed from the receiver tank 156 through the pipe 168 to the compressed air supply pipe 102.

In the next place, a water channel will be described.

The water storage reservoir 108 has a depth of about 7m. The air piston 105 of the air cylinder 104 is associated with the water pistons 112 and 115 in the water cylinder 109. When the piston 105 is pushed downwardly by supplying the compressed air to one pressure chamber 106 of the air cylinder 104, the water pistons 112 and 115 are also pushed down concurrently.

Each of the water pistons 112 and 115 has a double-layer structure in which 18 check valves having a diameter of 100mm are concentrically distributed in each of the layers, i.e., each of the water pistons has 36 check valves in total. The double-layer structure is employed so as to prevent water in the cylinder chamber 111 from escaping from the cylinder chamber 111 to the cylinder chamber 110 due to reaction which is caused when the water piston 115 in the opposite cylinder is elevated.

By reciprocating motion of the water pistons 112 and 115, water is alternately caused to move as follows. Water in the cylinder chamber 111 is discharged from the outlet 120 through a pumped-water pipe 21, and water in the cylinder chamber 110 is transferred through 36 check valves (not shown) into the cylinder chamber 111. When the water piston 112 descends, water in the cylinder chamber 111 is pushed by the water piston 112 and hence discharged from the outlet 120 through the pumped-water pipe 121 into a service water storage tank 122. On the other hand, the water piston 115 which is also associated with the same piston 105 is concurrently pushed down to cause water in the cylinder chamber 114 to be directed through the check valves to the cylinder chamber 113.

Upon arrival of the piston 105 and the water pistons 112 and 115 at their bottom dead centers, the above-mentioned direction of the air flow is switched over, and thereby the piston 105 begins ascending. Attendantly upon this, the water pistons 12 and 15 also begin ascending to transfer water in the cylinder chamber 110 into the cylinder chamber 111 through the check valves. Upon initiation of the ascent of the water piston 112, interior of the cylinder chamber 111 momentarily becomes vacuum. Under this vacuum condition, the water pistons 112 and 115 continue to ascend, and thereby water in the water storage reservoir 108 is sucked in and yet when the water piston 112 passes the air intake 118 provided in the cylinder, air enters into the cylinder chamber 111 from the air intake 118. In other words, the interior of the cylinder chamber 111 is initially filled only with water and afterward becomes filled with a mixture of water with the air introduced in mid course.

When the water piston 112 begins descending upon arrival of the water piston 112 at its top dead center, the mixture of water with air in the cylinder chamber 111 is pushed downwardly, in particular, the air in the cylinder chamber 111 is compressed. As the water piston 112 is pushed down with the air present in the cylinder as the mixture with water, the air is further compressed. When pressure of the air exceeds a predetermined value, the air is discharged together with the water through the outlet 120 to the outside of the cylinder.

At this time, the air which has been compressed is released from the pressurized condition to expand and, while coexisting with the water as a mixture, pushes the water upwardly from the outlet 120 through the pumped-water pipe 121 to the service water storage tank 122 located outside.

On the other hand, the same steps as in the cylinder chambers 110,111 are repeated in a cylinder chambers 113,114 opposite to the cylinder chambers 110,111. The water piston 115 is pushed down to cause water which has flowed into the cylinder chamber 114 through the water inlet 117 to be transferred from the cylinder chamber 114 to the cylinder chamber 113. When the water piston 115 passes a predetermined position in mid course of the movement in the cylinder 113,114, external air is introduced through the air intake 119 into the cylinder chamber 113 owing to negative pressure generated therein. As the water piston 115 ascends, the air is compressed to bring the pressure of the air to a predetermined pressure. When the predetermined pressure is reached, the air is discharged through an outlet 120 together with the water to release the air from the pressure, so that the water as a mixture with the air is pushed up from the outlet 120 to the service water storage tank 122 located outside.

In the water channel of this embodiment, each of the cylinder chambers 110, 111, 113 and 114 and the water pistons 112 and 115 has a diameter of 1400mm and each of the water pistons 112 and 115 travels a stroke of 250mm. Midway between the cylinder chambers 110,111 and the cylinder chambers 113,114, the outlet 120 is formed, and the outlet 120 has a diameter of 300mm. As the air intakes 118 and 119, pipes each having a diameter of 5 inches are used. The air intakes 118 and 119 are provided at the midpoints of the stroke of the respective water pistons 112 and 115, i.e. , at the positions of 12.5cm.

In this embodiment, there are arranged in parallel the two pumping machines each comprising the air cylinder 104 having the air piston 105 and the water cylinder 109 the two water pistons 112 and 115 which move in association with the piston 105. However, there may be used (a) pumping machine(s) in which a single water piston associated with a piston 105 is caused to vertically reciprocate attendantly upon movement of the piston 105 to take in water and to introduce air and the water is pumped up utilizing force of the compressed air. Further, besides the use of the two pumping machines in parallel, a single pumping machine may be used or three or more pumping machines may be used in parallel. Of these arrangements, those in which pumping machines are arranged in parallel and/or in which two water pistons are associated with a piston are preferred. The reason for this is that more smooth operation in pumping up water is enabled due to reduced number of times of air compression in spite of somewhat complicated valve control.

Incidentally, in the embodiment of the compressed air booster for the pumping machine of the present invention, the two two-stage reciprocating compressors are used in series. However, combinations of one-stage and two-stage compressors, one-stage and three-stage compressors, one-stage and four-stage compressors, and the like may be employed.

The pumping machine comprising the compressed air booster for the pumping machine according to the present invention may be used in the above-mentioned power generator system.

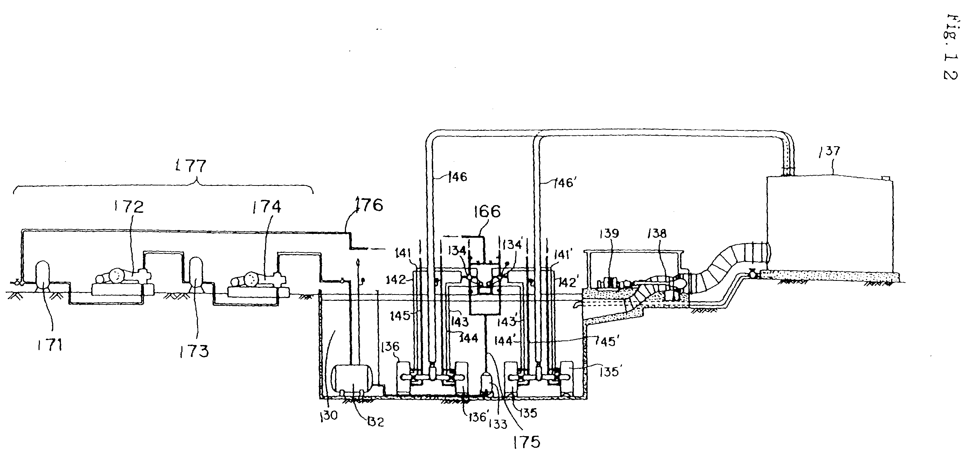

Fig.12 is a diagrammatic view schematically showing power generation mechanism utilizing such a pumping machine.

In the power generator system, an accumulator tank 132 (high pressure tank) stores up compressed air from boosting compressors 172,174. The boosting compressors 172,174 are operated with commercial power till initiation of private power generation. Thereafter, commercial power is switched over to private power to operate the boosting compressors. Reference numeral 133 represents an air receiver (relay tank), which transfers the compressed air from the accumulator tank 132 to a selector valves 134,134'. Reference numeral 171 represents a low pressure tank and reference numeral 173 represents an intermediate pressure tank, both of which store the compressed air.

In the power generator system according to this embodiment, 4 port connection-2 position rotary selector valve are used, and a KS type motor of 0.75 kw is used as a power for each of the selector valves 134,134'. The selector valves 134,134' are so constructed that air with a residual pressure from a return pipe 176 is caused to flow into a a booster circuit 177 and boosted through the low pressure tank 171, the first boosting compressor 172, the intermediate pressure tank 173 and the second boosting compressor 174 in the booster circuit 177 so as to pneumatically force itself to enter into the accumulator tank 132 (high pressure tank). In this embodiment, each of the two rotary selector valves 134 and 134' is used to deliver and to receive the compressed air, thereby effecting switchover between delivery and reception of the compressed air.

By the switchover between delivery and reception of the compressed air by means of the valves 134,134', pistons in air cylinders of the pumping machines 135, 135', 136, and 136' are alternately caused to reciprocate. In association with the movement of the pistons in the air cylinders, water pistons in water cylinders of the pumping machines are caused to reciprocate to pump up water in the water cylinders together with air which has been sucked therein to a service water storage tank 137. The pumped water is stored in the service water storage tank 137 and then released therefrom to drive a water turbine 138 by utilizing a head of the water, thereby operating a power generator 139 to obtain a predetermined generated energy.

The pumping machine having the above-mentioned construction is disposed under a predetermined water pressure, and air is sucked therein together with water under the water pressure and compressed while coexisting with the water and then released from the pressurized condition, and by virtue of the resulting expansion force of the air, the mixture of water with air can readily be pumped up to a predetermined height. The pumping machine enables extremely efficient power generation to be attained in cooperation with the compressed air booster according to the present invention.

The pumping machine according to the present invention is disposed under a predetermined water pressure, and air is sucked therein together with water under the water pressure and compressed while coexisting with the water and then released from the pressurized condition, and by virtue of the resulting expansion force of the air, the mixture of water with air can readily be pumped up to a predetermined height. This water-pumping up requires only extremely low energy, and hence a highly efficient pumping equipment can be provided. Consequently, there is provided a generator system which utilizes this pumping equipment to carry out water-pumping up and utilizes fall of the water to generate power. Also in this case, only low energy is required, and therefore, this generator system is also highly efficient.

Further, since the pumping equipment is satisfactorily performable so long as it is disposed under a predetermined water pressure, it may be used, for example, in a driving means of a ship by disposing miniaturized one to form a generator, leading to extremely wide variety of applications.

According to the present invention, the pumping machine is so constructed as to be capable of utilizing compression and expansion of air which is sucked therein together with water to be pumped up, and accordingly, exhibits an effect that the water sucked therein together with the air can be pumped up with small energy consumption.

According to the present invention, there is provided a compressed air boosting compressor for the pumping machine used in the power generator system according to claim 6, which comprises as an air pressure source connected to said return pipe in series:
a low pressure tank for storing air with a residual pressure,
a first boosting compressor for sucking the air with a residual pressure from said low pressure tank,
an intermediate pressure tank for storing the compressed air discharged from said first boosting compressor and for preventing abrupt change in the pressure,
a second boosting compressor for boosting the compressed air with an intermediate pressure from said intermediate pressure tank to a predetermined pressure,
a high pressure tank for storing the compressed air discharged from said second boosting compressor and for preventing abrupt change in the pressure, and
a receiver tank which is connected to said supply pipe for relaying the compressed air from said high pressure tank to said supply pipe;
each of said first and second boosting compressors being selected from the group consisting of one-stage to multi-stage reciprocating compressors.

Accordingly, each of the first and second boosting compressors may be selected from reciprocating compressors with any number of stages. Further, since the boosting compressors are disposed in series, power consumption is reduced, and yet, those having small number of stage(s)may be used, thereby enabling lower initial cost to be attained as compared with use of one multi-stage reciprocating compressor having a large capacity. Moreover, the compressed air still retaining a residual pressure (positive pressure) can be used as air to be compressed to a predetermined pressure (about 5kg/cm² G). This leads to energy saving and is waste free, as compared with use of external air which has no additional pressure. Furthermore, by utilizing this boosting compressor, highly efficient pumping machines and power generator systems are realized.

## Claims

1. A pumping machine disposed under a predetermined water pressure and comprising:
an air cylinder (6) including a piston (5) which reciprocates by switchover between delivery and reception of compressed air,
a water cylinder (51) including a valve means (12, 15) which reciprocates in association with the movement of the piston (5) of the air cylinder (6),
an air intake (18, 19) formed about the middle of said water cylinder (51) for introducing external air together with water under the predetermined water pressure into said water cylinder (51) by the reciprocatinq motion of said valve means (12, 15), and
an outlet (20) for discharging the mixture of water with air in said cylinder by the reciprocating motion of said valve means (12, 15).

2. The pumping machine according to claim 1, wherein the switchover between delivery and reception of compressed air is conducted by switching a four port connection valve (34, 34') at predetermined intervals.

3. The pumping machine according to claim 1, wherein the cylinder including said valve means (12, 15) which reciprocates in association with said piston (5) of the air cylinder (6) is of such a type that two valve means (12, 15) are simultaneously caused to reciprocate.

4. A cylinder for the pumping machine of any of claims 1 to 3 comprising:
a cylindrical hollow body (50) formed with a first through-hole (20) at its mid portion and second and third through-holes (18, 19) in the vicinities of its ends,
a cylindrical hollow member (51) which is fitted in said cylindrical body (50) slidably in the longitudinal direction of the cylindrical body (50) and which is formed with a communication opening (54) which is in communication with the first through-hole (20),
valve means (12, 15) mounted on the ends of said cylindrical member (51),
a cylinder member (6) which is contained in said cylindrical member (51) and which has ports (52a, 52b) in the vicinities of its ends, and
a piston member (5) which is slidably disposed in said cylinder member (6) and which has a rod (5a) extending through said cylinder member (6) and having its ends fixedly connected to said valve means (12, 15);
wherein said valve mans (12, 15) each include two plates to define a cylinder chamber (11, 13) having a communication opening in communication with said second or third through-hole (18, 19), said plates each having a plurality of check valves (55) arranged therein, said check valves (55) each being mounted to permit a fluid to flow only in the direction toward the inner portion of said cylinder member.

5. A generator system comprising:
a selector valve (34, 34') for switchover between delivery and reception of compressed air,
a pumping machine (35, 35', 36, 36') disposed under a predetermined water pressure, said pumping machine (35, 35', 36, 36') comprising a piston (5) including air cylinder (6) and valve means (12, 15), said piston (5) being causing to reciprocate in the air cylinder (6) by the switchover between delivery and reception of compressed air to reciprocate the valve means (12, 15) in association with movement of the piston (5), said valve means (12, 15) thereby effecting introduction of external air as well as suction of water under the predetermined pressure,
a service water storage tank (37) for storage of pumped water,
a water turbine (38) which is rotated by utilizing a head of water released from the service water storage tank (37), and
a power generator (39) which is caused to operate in association with the water turbine (38).

6. The generator system according to claim 5, wherein the air cylinder (6) is connected to an accumulator tank (32) and an air receiver (33) for delivery of the compressed air, said accumulator tank (32) and said air receiver (33) being disposed under a predetermined water pressure.

7. The generator system according to claim 5, wherein said pumping machine is one disposed under a predetermined water pressure and comprising:
an air cylinder (104) including a piston (105) which reciprocates by switchover between delivery of compressed air to a supply pipe (102) and reception of compressed air from a return pipe (103),
a water cylinder (109) including a water piston (112, 115) which is located coaxially with the piston (105) of the air cylinder (104) and which reciprocates in association with the movement of the piston (105) of the air cylinder (104),
an air intake (118, 119) formed about the middle of said water cylinder (109) for introducing external air together with water under the predetermined water pressure into water in a cylinder chamber (111, 113) of said water cylinder (109) by negative pressure generated in the cylinder chamber (111, 113) in the course of the reciprocating motion of said water piston (112, 115), and
an outlet (120) for discharging the mixture of water with air in said cylinder chamber (111, 113), which has been compressed to a predetermined pressure, by the reciprocating motion of said water piston (112, 115).

8. A generator system according to claim 7 including a compressed air boosting compressor for the pumping machine, which comprises as an air pressure source connected to said return pipe (103) in series:
a low pressure tank (151) for storing air with a residual pressure,
a first boosting compressor (152) for sucking the air with a residual pressure from said low pressure tank (151),
an intermediate pressure tank (153) for storing the compressed air discharged from said first boosting compressor (152) and for preventing abrupt change in the pressure,
a second boosting compressor (154) for boosting the compressed air with an intermediate pressure from said intermediate pressure tank (153) to a predetermined pressure,
a high pressure tank (155) for storing the compressed air discharged from said second boosting compressor (154) and for preventing abrupt change in the pressure, and
a receiver tank (156) which is connected to said supply pipe (102) for relaying the compressed air from said high pressure tank (155) to said supply pipe (102);
each of said first and second boosting compressors being selected from the group consisting of one-stage to multi-stage reciprocating compressors.

9. The generator system according to claim 8, wherein each of said first and second boosting compressors is a two-stage reciprocating compressor.

## Patentansprüche

1. Unter einem vorbestimmten Wasserdruck angeordnete Pumpe, mit
einem Luftzylinder (6) mit einem Kolben (5), welcher durch Umschalten zwischen Liefern und Empfangen komprimierter Luft reziprokiert,
einem Wasserzylinder (51) mit einer Ventileinrichtung (12, 15), welche zusammen mit der Bewegung des Kolbens (5) des Luftzylinders (6) reziprokiert,
einem etwa in der Mitte des Wasserzylinders (51) ausgebildeten Lufteinlaß zum Zuführen externer Luft zusammen mit Wasser unter dem vorbestimmten Wasserdruck in den Wasserzylinder (51) durch die reziprokierende Bewegung der Ventileinrichtung (12, 15), und
einem Auslaß (20) zum Ausstoßen der Mischung von Wasser mit Luft in dem Zylinder durch die reziprokierende Bewegung der Ventileinrichtung (12, 15).

2. Pumpe nach Anspruch 1, wobei das Umschalten zwischen Liefern und Empfangen komprimierter Luft durch Umschalten eines Vieranschluß-Verbindungsventils (34, 34') mit vorbestimmten Intervallen ausgeführt wird.

3. Pumpe nach Anspruch 1, wobei der Zylinder mit der Ventileinrichtung (12, 15), die zusammen mit dem Kolben (5) des Luftzylinders (6) reziprokiert, von einem solchen Typ ist, daß zwei Ventileinrichtungen (12, 15) simultan reziprokiert werden.

4. Zylinder für die Pumpe nach einem der Ansprüche 1 bis 3, mit einem zylindrischen Hohlkörper (50) der in seinem Mittelabschnitt mit einem ersten Durchgangsloch (20) versehen ist und zweite und dritte Durchgangslöcher (18, 19) in der Nähe seiner Enden hat,
einem zylindrischen Hohlelement (51), welches verschiebbar in der Längsrichtung des Zylinderkörpers (50) in den Zylinderkörper (50) eingesetzt ist, und mit einer Verbindungsöffnung (50) versehen ist, die mit dem ersten Durchgangsloch (20) verbunden ist, Ventileinrichtungen (12, 15), die an den Enden des zylindrischen Elements (51) angebracht sind,
einem Zylinderteil (6), welches in dem zylindrischen Element (51) aufgenommen ist und Anschlüsse (52a, 52b) in der Nähe seiner Enden hat, und
einem Kolbenelement (5), welches verschiebbar in dem Zylinderteil (6) angeordnet ist und eine Stange (5a) hat, die sich durch das Zylinderteil (6) erstreckt und deren Enden fest mit den Ventileinrichtungen (12, 15) verbunden sind,
wobei die Ventileinrichtungen (12, 15) jeweils zwei Platten enthalten, um eine Zylinderkammer (11, 13) zu begrenzen, die eine Verbindungsöffnung in Verbindung mit dem zweiten oder dem dritten Durchgangsloch (18, 19) hat, wobei die Platten jeweils eine Vielzahl von Rückschlagventilen (55) darin angeordnet haben, wobei die Rückschlagventile (55) jeweils so angebracht sind, daß sie einen Fluß eines Fluids lediglich in der Richtung auf den Innenabschnitt des Zylinderteils zulassen.

5. Ein Stromerzeugungssystem, mit
einem Umschaltventil (34, 34') zum Umschalten zwischen Liefern und Empfangen komprimierter Luft,
einer Pumpe (35, 35', 36, 36'), die unter einem vorbestimmten Wasserdruck angeordnet ist, wobei die Pumpe (35, 35', 36, 36') einen Kolben (5) mit einem Luftzylinder (6) und Ventileinrichtungen (12, 15) hat, wobei der Kolben (15) durch das Umschalten zwischen dem Liefern und Empfangen komprimierter Luft in dem Luftzylinder (6) reziprokiert wird, um die Ventileinrichtungen (12, 15) zusammen mit der Bewegung des Kolbens (5) zu reziprokieren, wobei die Ventileinrichtungen (12, 15) dadurch sowohl das Zuführen externer Luft sowie das Ansaugen von Wasser unter dem vorbestimmten Druck ausführen,
einem Brauchwasserspeichertank (37) zum Speichern gepumpten Wassers,
einer Wasserturbine (38), die durch Verwendung einer Wassersäule von dem Brauchwasserspeichertank (37) abegegebenen Wassers gedreht wird, und
einem Stromerzeuger (39), welcher zusammen mit der Wasserturbine (38) betrieben wird.

6. Stromerzeugungssystem nach Anspruch 5, wobei der Luftzylinder (6) mit einem Sammeltank (32) und einem Luftaufnehmer (33) zur Lieferung der komprimierten Luft verbunden ist, wobei der Sammeltank (32) und der Luftaufnehmer (33) unter einem vorbestimmten Wasserdruck angeordnet sind.

7. Stromerzeugungssystem nach Anspruch 5, wobei die Pumpe eine unter einem vorbestimmten Wasserdruck angeordnete ist, mit
einem Luftzylinder (104) mit einem Kolben (105), welcher durch Umschalten zwischen Liefern komprimierter Luft zu einer Zuführleitung (102) und Empfangen komprimierter Luft von einer Rückführleitung (103) reziprokiert,
einem Wasserzylinder (109) mit einem Wasserkolben (112, 115), der koaxial mit dem Kolben (105) des Luftzylinders (104) angeordnet ist und zusammen mit der Bewegung des Kolbens (105) des Luftzylinders (104) reziprokiert,
einem etwa in der Mitte des Wasserzylinders (109) angeordneten Lufteinlaß (118, 119) zum Zuführen externer Luft zusammen mit Wasser unter dem vorbestimmten Wasserdruck in das Wasser in einer Zylinderkammer (111, 113) des Wasserzylinders (109) durch in der Zylinderkammer (111, 113) erzeugtem Unterdruck während der reziprokierenden Bewegung des Wasserkolbens (112, 115), und
einem Auslaß (120) zum Ausstoßen der Mischung von Wasser mit Luft in der Zylinderkammer (111, 113), die durch die reziprokierende Bewegung des Wasserkolbens (112, 115) auf einen vorbestimmten Druck komprimiert wurde.

8. Stromerzeugungssystem nach Anspruch 7, mit einem Druckluftverstärkungsverdichter für die Pumpe, der eine als eine in Serie an die Rückführleitung (103) angeschlossene Druckluftquelle aufweist, mit
einem Niederdrucktank (151) zum Speichern von Luft mit einem Restdruck,
einem ersten Verstärkungsverdichter (152) zum Ansaugen der Luft mit einem Restdruck von dem Niederdrucktank (151),
einem Zwischendrucktank (153) zum Speichern der von dem ersten Verstärkungsverdichter (152) abgegebenen komprimierten Luft und zur Verhinderung abrupter Druckwechsel,
einem zweiten Verstärkungsverdichter (154) zum Bedrucken der komprimierten Luft mit einem Zwischendruck von dem Zwischendrucktank (153) auf einen vorbestimmten Druck,
einem Hochdrucktank (155) zum Speichern der komprimierten Luft, die von dem zweiten Verstärkungsverdichter (154) abgegeben ist, und zur Verhinderung abrupter Druckwechsel, und
einem Aufnahmetank (156), welcher mit der Zuführleitung (102) verbunden ist, um die komprimierte Luft von dem Hochdrucktank (155) zu der Zuführleitung (102) weiterzuleiten,
wobei jeder der ersten und zweiten Verstärkungsverdichter aus der Gruppe der einstufigen bis mehrstufigen Verstärkungsverdichter gewählt ist.

9. Stromerzeugungssystem nach Anspruch 8, wobei der erste und der zweite Verstärkungsverdichter ein zweistufiger Verdrängungsverdichter ist.

## Revendications

1. Une machine de pompage disposée sous une pression d'eau prédéterminée et comprenant :
un cylindre à air (6) comprenant un piston (5) soumis à un mouvement alternatif par commutation entre une fourniture et une réception d'air comprimé,
un cylindre à eau (51) comprenant des moyens de soupape (12, 15) soumis à un mouvement alternatif, en association avec le déplacement du piston (5) du cylindre à air (6)
une admission d'air (18, 19) formée autour du centre dudit cylindre à eau (51) afin d'introduire de l'air externe conjointement avec de l'eau sous la pression d'eau prédéterminée dans ledit cylindre à eau (51) sous le déplacement alternatif desdits moyens de soupape (12, 15), et
une sortie (20) destinée à décharger le mélange d'eau avec l'air dans ledit cylindre par l'effet du déplacement alternatif desdits moyens de soupape (12, 15).

2. La machine de pompage selon la revendication 1, dans laquelle la commutation entre la fourniture et la réception d'air comprimé est conduite en commutant une soupape de connexion à quatre orifices (34, 34'), à des intervalles de temps prédéterminés.

3. La machine de pompage selon la revendication 1, dans laquelle le cylindre comprenant lesdits moyens de soupape (12, 15) soumis à un mouvement alternatif en association avec ledit piston (5) du cylindre à air (6) est d'un type tel que deux moyens de soupape (12, 15) sont simultanément mis en mouvement alternatif.

4. Un cylindre pour la machine de pompage selon l'une quelconque des revendications 1 à 3, comprenant :
un corps creux cylindrique (50) formé avec un premier trou traversant (20) à sa partie médiane et des deuxième et troisième trous traversants (18, 19) placés à proximité de ses extrémités,
un organe creux cylindrique (51) monté dans ledit corps cylindrique (50), de façon à pouvoir coulisser dans la direction longitudinale du corps cylindrique (50) et formé avec une ouverture de communication (54) mise en communication avec le premier trou traversant (20),
des moyens de soupape (12, 15) montés sur les extrémités dudit organe cylindrique (51),
un organe cylindrique (6) contenu dans ledit organe cylindrique (51) et ayant des orifices (52a, 52b) placés à proximité de ses extrémités, et
un organe formant piston (5), disposé de façon coulissante dans ledit organe cylindrique (6) et ayant une tige (5a) s'étendant à travers organe cylindrique (6) et ayant ses extrémités reliées de façon rigide auxdits moyens de soupape (12, 15);
dans lequel lesdits moyens de soupape (12, 15) comprennent chacun deux plaques destinées à définir une chambre de cylindre (11, 13) ayant une ouverture de communication communiquant avec ledit deuxième ou troisième trou traversant (18, 19), lesdites plaques ayant chacune une pluralité de clapets anti-retour (55) agencés en elles, lesdits clapets anti-retour (55) étant chacun montés pour permettre à un fluide de s'écouler seulement dans la direction allant vers la partie interne dudit organe cylindrique.

5. Un système de générateur comprenant :
une valve de sélecteur (34, 34') destinée à commuter entre une fourniture et une réception d'air comprimé,
une machine de pompage (35, 35', 36, 36') disposée sous une pression d'eau prédéterminée, ladite machine de pompage (35, 35', 36, 36') comprenant un piston (5) comprenant un cylindre à air (6) et des moyens de soupape (12, 15), ledit piston (5) étant soumis à un mouvement alternatif dans le cylindre à air, par la commutation entre la fourniture et la réception d'air comprimé, pour mettre en mouvement alternatif les moyens de soupape (12, 15) en association avec le déplacement du piston (5), lesdits moyens de soupape (12, 15) effectuant de cette manière une introduction d'air externe ainsi qu'une aspiration d'eau sous la pression prédéterminée,
un réservoir de stockage d'eau de service (37) destiné à stocker de l'eau pompée,
une turbine à eau (38) mise en rotation par utilisation de la hauteur de colonne d'eau libérée par le réservoir de stockage d'eau de service (37), et
un générateur de puissance (39) destiné à fonctionner en association avec la turbine à eau (38).

6. Le système générateur selon la revendication 5, dans lequel le cylindre à air (6) est connecté à un réservoir d'accumulateur (32) et un récepteur à air (33) pour fournir de l'air comprimé, ledit réservoir d'accumulateur (32) et ledit récepteur à air (33) étant disposés sous une pression d'eau prédéterminée.

7. Le système générateur selon la revendication 5, dans lequel ladite machine de pompage est une machine disposée sous une pression d'eau prédéterminée et comprenant :
un cylindre à air (104) comprenant un piston (105) soumis à un mouvement alternatif par commutation entre la fourniture d'air comprimé à un tube d'alimentation (102) et la réception d'air comprimé depuis un tube de retour (103),
un cylindre à eau (109), comprenant un piston à eau (112, 115) placé coaxialement vis-à-vis du piston (105) du cylindre à air (104) et soumis à un mouvement alternatif en association avec le déplacement du piston (105) du cylindre à air (104),
une admission d'air (118, 119) formée autour du centre dudit cylindre à eau (109) pour introduire de l'air externe conjointement avec de l'eau, sous la pression d'eau prédéterminée, dans l'eau dans une chambre de cylindre (111, 113) dudit cylindre à eau (109), par la pression négative générée dans la chambre de cylindre (111, 113) au cours du déplacement alternatif dudit piston à eau (112, 115), et
une sortie (120) destinée à décharger le mélange d'eau avec l'air dans ladite chambre de cylindre (111, 113), ayant été comprimé à une pression prédéterminée par l'effet du déplacement alternatif effectué par ledit piston à eau (112, 115).

8. Un système générateur selon la revendication 7, comprenant un compresseur de suralimentation d'air comprimé destiné à la machine de pompage, comprenant à titre de source de pression d'air branchée en série vis-à-vis dudit tuyau de retour (103) :
un réservoir basse pression (151) destiné à stocker de l'air à une pression résiduelle,
un premier compresseur de suralimentation (152) pour aspirer de l'air à une pression résiduelle depuis ledit réservoir à basse pression (151),
un réservoir de pression intermédiaire (153) destiné à stocker de l'air comprimé déchargé dudit premier compresseur de suralimentation (152) et pour empêcher toute fluctuation brutale de la pression,
un deuxième compresseur de suralimentation (154) destiné à suralimenter l'air comprimé à une pression intermédiaire venant dudit réservoir de pression intermédiaire (153) à une pression prédéterminée,
un réservoir à haute pression (155) destiné à stocker l'air comprimé déchargé depuis le deuxième compresseur de suralimentation (154) et à empêcher toute fluctuation brutale de la pression, et
un réservoir récepteur (156) connecté audit tuyau d'alimentation (102) pour relayer l'air comprimé dudit réservoir à pression élevée (155) audit tuyau d'alimentation (102);
chacun desdits premier et deuxième compresseurs de suralimentation étant sélectionné dans le groupe constitué des compresseurs à mouvement alternatif ayant d'un étage jusqu'à plusieurs étages.

9. Le svstème générateur selon la revendication 8, dans lequel chacun desdits premier et deuxième compresseurs est un compresseur à mouvement alternatif à deux étages.
